# FASCICULE DE BREVET EUROPEEN

(11) **EP 4 015 263 B1**
(45) Date de publication et mention de la délivrance du brevet: **10.07.2024**
(21) Numéro de dépôt: 21215657.4
(22) Date de dépôt: 17.12.2021
(51) Int. Cl.: B60G 15/06, F16C 17/04, F16F 9/00

(54) **VEHICULE AUTOMOBILE**
KRAFTFAHRZEUG
MOTOR VEHICLE

(30) Priorité: 18.12.2020 FR 2013602
(43) Date de publication de la demande: 22.06.2022
(73) Titulaire: Renault s.a.s, 92100 Boulogne Billancourt (FR)
(72) Inventeur: CUBAUD, OLIVIER, 78360 MONTESSON (FR); ANGELINI, Jerome, 95600 Eaubonne (FR); BOURDIER, CELINE, 72220 Teloche (FR); TRIQUENAUX, Frederic, 91440 Bures sur Yvette (FR)
(74) Mandataire: Renault Group

(56) Documents cités:
- DE-A1- 10 335 956
- DE-A1- 102007 023 886
- DE-A1- 102013 210 046
- DE-A1- 102014 218 800
- DE-A1- 102016 214 179
- DE-A1- 102017 009 600
- DE-A1- 102017 009 601
- DE-A1- 102017 205 091
- DE-A1- 102017 221 651
- DE-U1- 202019 106 036
- US-A1- 2006 215 945

## Description

### Domaine technique de l'invention

La présente invention concerne un véhicule.

### Arrière-plan technique

La présente invention concerne les dispositifs de suspension de type Mac-Pherson ou pseudo Mac-Pherson qui sont montés sur les essieux directeurs des véhicules automobiles, particulièrement les jambes de force et leur rôle dans l'équilibre du système de direction. L'intérêt de ce type de suspension est qu'il présente un nombre réduit d'éléments et un encombrement limité par rapport à d'autres systèmes.

De manière connue, une jambe de force destinée à équiper une suspension d'une roue de véhicule automobile, comporte :
- un amortisseur équipé d'une tige axiale télescopique dont un tronçon d'extrémité supérieure est lié à un élément structurel du véhicule automobile ;
- un ressort hélicoïdal qui entoure la tige télescopique ;
- une coupelle supérieure d'appui axial de l'extrémité supérieure du ressort hélicoïdal ;
- une butée tournante qui est interposée axialement entre la coupelle supérieure et l'élément structurel, et qui comporte une bague supérieure qui est fixe par rapport à l'élément structurel et une bague inférieure tournante qui reçoit l'effort du ressort hélicoïdal ;
- un bloc élastique dit de choc qui entoure la tige télescopique de l'amortisseur et dont un tronçon supérieur transmet son effort à l'élément structurel ;
- un ensemble de filtration qui comporte une enveloppe cylindrique radialement extérieure qui est fixée à l'élément structurel, un bloc filtrant intermédiaire, et un élément radialement intérieur de fixation auquel est fixé le tronçon d'extrémité supérieure de la tige télescopique de l'amortisseur.

L'invention vise à proposer une conception intégrée et compacte des différents composants de la partie supérieure d'une telle jambe de force qui en facilite notamment l'assemblage, le montage, et la maintenance.

Tandis que le document DE 20 2019 106036 U1 divulgue un véhicule selon le préambule de la revendication 1, les documents DE 10 2017 205091 A1, DE 10 2016 214179 A1 et DE 10 2017 221651 A1 présentent d'autres véhicules de l'état de la technique.

### Résumé de l'invention

L'invention propose un véhicule selon les caractéristiques de la revendication 1.

Selon d'autres caractéristiques de l'invention :
- le support multifonctions comporte :
   -- un fut cylindrique de filtration, ouvert axialement vers le haut, qui est constitué d'une jupe cylindrique latérale et d'une cloison radiale inférieure qui délimitent latéralement et axialement vers le bas la cavité de filtration, et dont la cloison radiale inférieure est percée centralement pour le passage du tronçon d'extrémité supérieure de la tige télescopique ;
   -- un fut cylindrique de choc, ouvert axialement vers le bas, qui est constitué d'une jupe cylindrique latérale et de ladite cloison radiale qui délimitent latéralement et axialement vers le haut la cavité de choc ;
   -- la bride latérale de montage du support multifonctions sur l'élément structurel, qui s'étend radialement vers l'extérieur, dont une face inférieure délimite axialement vers le haut le logement latéral et en vis à vis de laquelle est agencée la bague supérieure de la butée tournante ;
   -- une pièce annulaire complémentaire qui est rapportée sous la bride latérale de montage et qui, avec la bride latérale de montage, délimite le logement latéral ;
- la butée tournante est agencée axialement en-dessous de la cavité de filtration ;
- la butée tournante entoure la cavité de filtration ;
- la cavité de choc comporte des moyens d'accrochage du tronçon supérieur du bloc de choc ;
- l'écrou de serrage axial, monté vissé sur une portion filetée extérieurement du fut cylindrique de fixation, comporte une collerette latérale inférieure de serrage qui est apte à coopérer avec une portion en vis à vis de la bride latérale de montage du support multifonctions pour serrer axialement une portion de l'élément structurel contre une portion en vis à vis de la bride latérale de montage ;
- au moins un élément de fixation du support multifonctions sur l'élément structurel est une vis de serrage axial qui est montée vissée dans un trou taraudé de la bride latérale de montage du support multifonctions et dont la tête de serrage est apte à coopérer avec une portion en vis à vis de l'élément structurel pour la serrer axialement contre une portion en vis à vis de la bride latérale de montage ;
- l'enveloppe cylindrique radialement extérieure de l'ensemble de filtration est une douille qui est montée sertie axialement à l'intérieur du fut de filtration du support multifonctions ;
- la butée tournante est une butée à billes qui est logée dans le logement latéral entre la bride latérale et la pièce annulaire complémentaire qui est rapportée sous la bride latérale ;
- la butée tournante est une butée à anneau de frottement qui est interposé axialement entre la bague supérieure de la butée tournante qui est fixée sous la bride latérale de montage, et la pièce annulaire complémentaire qui est rapportée sous la bride latérale de montage, constitue la bague inférieure tournante de la butée tournante.

### Brève descriptions des figures

D'autres caractéristiques et avantages de l'invention apparaitront au cours de la lecture de la description détaillée qui va suivre pour la compréhension de laquelle on se reportera aux dessins annexés dans lesquels :
[Fig.1] - la figure 1 est une vue schématique de côté d'un véhicule équipé d'une jambe de force ;
[Fig.2] - la figure 2 est une vue de détail à plus grande échelle en coupe par un plan axial qui représente l'extrémité supérieure d'une jambe de force réalisée selon un premier exemple de réalisation de l'invention dans lequel la butée tournante est une butée à anneau de frottement ;
[Fig.3] - la figure 3 est une vue en perspective éclatée des composants de la jambe de force représentée à la figure 2 ;
[Fig.4] - la figure 4 est une demi-vue en coupe axiale et en perspective de la jambe de force représentée à la figure 2 ;
[Fig.5] - la figure 5 est une vue de détail à grande échelle et en coupe axiale du support multifonctions de la jambe de force représentée aux figures 2 à 4 ;
[Fig.6] - la figure 6 est une vue en coupe axiale qui représente une variante de la butée tournante de la jambe de force qui est ici une butée à billes ;
[Fig.7] - la figure 7 est une demi-vue partielle en coupe axiale et en perspective qui représente l'intégration de la butée tournante à billes dans la jambe de force ;
[Fig.8] - la figure 8 est une vue analogue à celle de la figure 2, qui représente un premier exemple non-revendiqué d'une jambe de force dans lequel le support multifonctions est associé à une butée tournante à billes ;

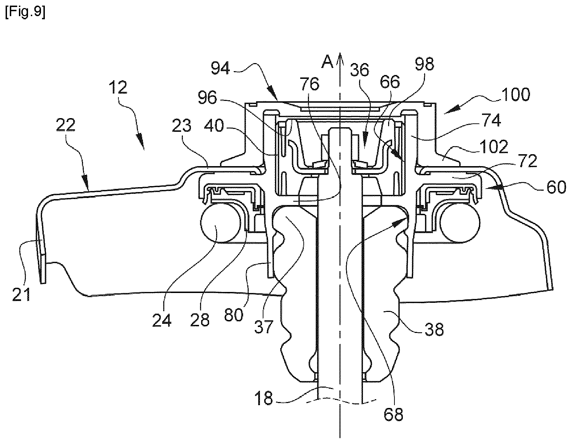

[Fig.9] - la figure 9 est une vue analogue à celle de la figure 2, qui représente un deuxième exemple non-revendiqué d'une jambe de force dans lequel le support multifonctions est associé à une butée tournante à anneau de frottement ;
[Fig.10] - la figure 10 est une vue analogue à celle de la figure 9, qui représente une variante de la butée tournante de la jambe de force qui est ici une butée à billes ;

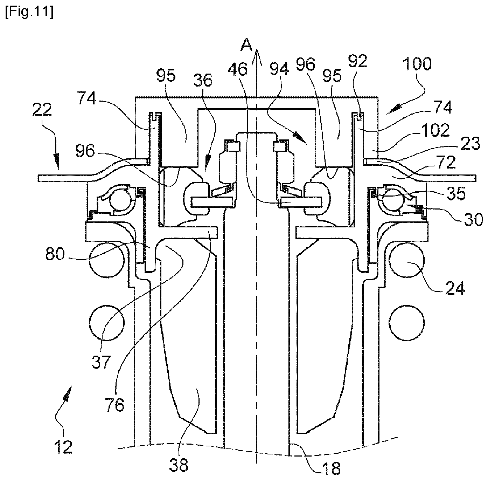

[Fig.11] - la figure 11 est une vue analogue à celle de la figure 2, qui représente un troisième exemple non-revendiqué d'une jambe de force dans lequel le support multifonctions est associé à une butée tournante à billes ;

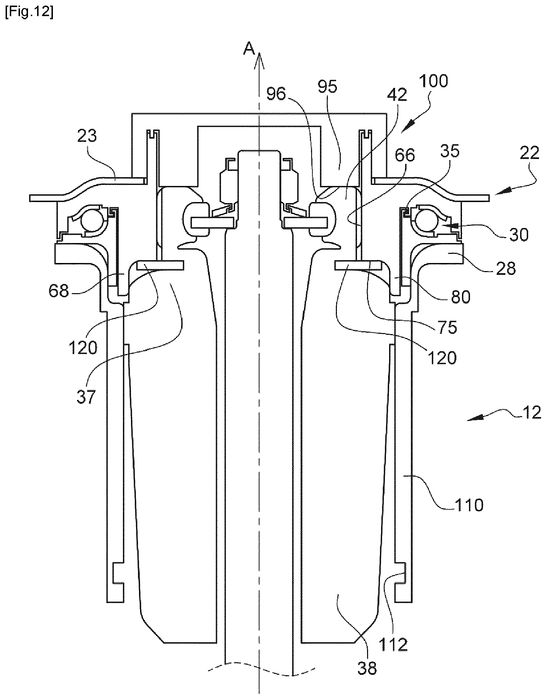

[Fig.12] - la figure 12 est une vue analogue à celle de la figure 2, qui représente un quatrième exemple non-revendiqué d'une jambe de force dans lequel le support multifonctions est associé à une butée tournante à billes.

### Description détaillée de l'invention

Pour la description de l'invention et la compréhension des revendications, on adoptera à titre non limitatif et sans référence limitative à la gravité terrestre les orientations verticale, longitudinale et transversale selon le repère V, L, T - indiqué aux figures et associé au véhicule automobile dans son ensemble - dont les axes longitudinal L et transversal T s'étendent dans un plan horizontal.

La direction verticale est utilisée à titre de repère purement géométrique comme étant une direction orthogonale à la route sur laquelle se trouve le véhicule.

Pour la description, on utilisera les termes haut, bas, supérieur, inférieur, etc. en référence à l'orientation des figures et de l'axe « A » qui est orienté de bas en haut.

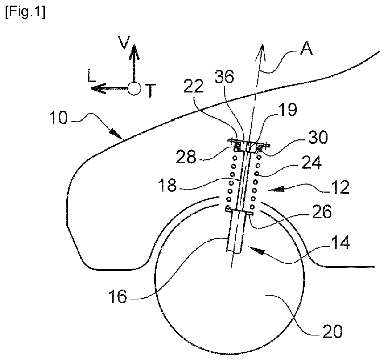

On a représenté à la figure 1 l'avant 10 d'un véhicule automobile véhicule vu de côté et la jambe de force avant gauche 12. Tout ce qui est décrit ci-après s'applique aux deux côtés du train avant du véhicule.

La jambe de force 12 comporte un amortisseur 14 d'axe « A » comprenant un corps 16 dans lequel une tige 18 est montée télescopique axialement selon l'axe A.

Une extrémité inférieure du corps 16 est liée avec une roue 20 directrice associée du véhicule, par exemple par l'intermédiaire d'une chape (Non représentée), tandis que le tronçon 19 d'extrémité supérieure libre de la tige 18 est destiné à être lié à un élément structurel suspendu 22 du véhicule, tel qu'un élément de carrosserie ou un élément de caisse, ou tout composant rapporté et fixé sur un tel élément.

La jambe de force 12 est aussi équipée d'un ressort 24 hélicoïdal de suspension qui permet d'absorber élastiquement les chocs. Le ressort 24 présente un axe central dit "axe d'action" le long duquel est dirigée la force élastique du ressort 24.

Le ressort 24 est enfilé autour de la tige 18 d'amortisseur et ces deux éléments sont globalement coaxiaux.

Le ressort 24 est monté comprimé axialement entre une coupelle inférieure 26 et une coupelle supérieure 28.

La coupelle inférieure 26 est ici fixée au corps 16 de l'amortisseur 14, tandis que la coupelle supérieure 28 est portée par l'élément structurel 22 du véhicule.

S'agissant d'une jambe de force 12 associée à une roue 20 directrice, la coupelle supérieure 28 est liée à l'élément structurel 22 par l'intermédiaire d'une butée tournante 30 qui est ici représentée sous la forme d'une butée à billes, ou bien en variante une butée comportant un anneau de frottement.

La butée tournante 30 est plus particulièrement interposée axialement entre la coupelle supérieure 28 et l'élément structurel 22.

La butée tournante 30 permet ainsi de faire tourner le ressort 24 de suspension par rapport à l'élément structurel lors du braquage de la roue 10.

La jambe de force 12 comporte aussi un l'ensemble de filtration 36 qui réalise la fixation du tronçon 19 d'extrémité supérieure libre de la tige 18 sur l'élément structurel 22. L'ensemble de filtration 36 a pour fonction d'absorber certaines vibrations de la tige 18 pour éviter qu'elles ne soient transmises à la structure du véhicule, par exemple pour éviter l'apparition de bruits parasites.

### Premier exemple de réalisation

### Figures 2 à 5

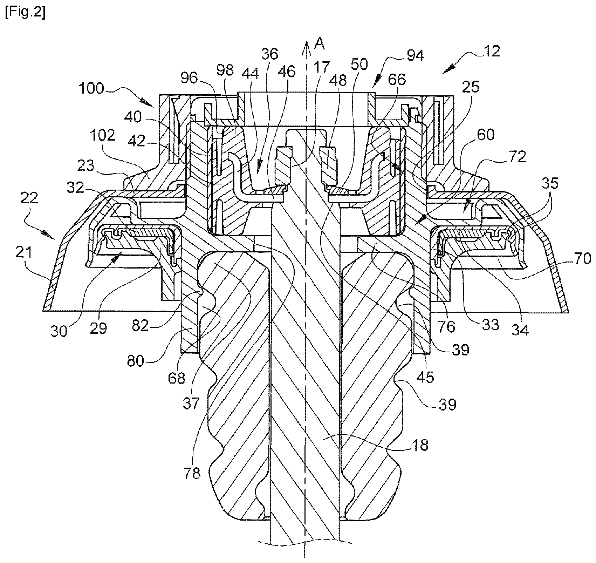

La figure 2 représente une jambe de force 12 dont la partie supérieure est fixée sur un élément structurel 22 qui présente une forme générale d'une coupole qui comporte une jupe latérale radialement extérieure 21 qui prolonge intérieurement une joue supérieure radiale et annulaire 23 de fixation qui délimite un trou central 25.

La butée tournante comporte une bague inférieure 29 qui est montée tournante dans une bague supérieure 31 qui est fixe par rapport à l'élément structurel 22.

La bague inférieure tournante 29 reçoit ainsi l'effort du ressort 24. La bague inférieure 29 est destinée à tourner de manière solidaire avec le ressort 24 de suspension autour de l'axe principal du ressort 24.

La jambe de force 12 comporte un support multifonctions 60 selon l'invention qui est associé à la butée tournante 30 ici du type à anneau de frottement 32, c'est-à-dire comportant un anneau plat 32 qui est réalisé dans un matériau à coefficient de friction réduit, et qui est interposé axialement entre la bague inférieure tournante 29 et la bague supérieure fixe 31. Les trois composants 29, 31 et 32 de la butée tournante 30 comportent des portions axiales tubulaires radialement intérieures qui servent à leur centrage mutuel.

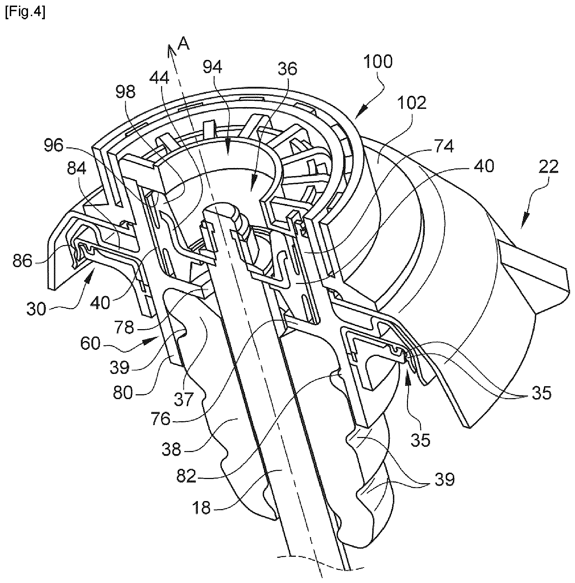

La bague supérieure fixe 31 comporte ainsi une paroi axiale tubulaire intérieure 33 qui se prolonge radialement vers l'extérieur par une joue supérieure radiale et annulaire 34. Comme on peut le voir notamment aux figures 2 et 4, à leur périphérie radiale extérieure, les bagues 29 et 31 comportent des moyens 35 d'accrochage mutuel de manière que la butée tournante 30 forme un tout structurel sous la forme d'un sous-ensemble qui est intégré à la partie supérieure de la jambe de force 12.

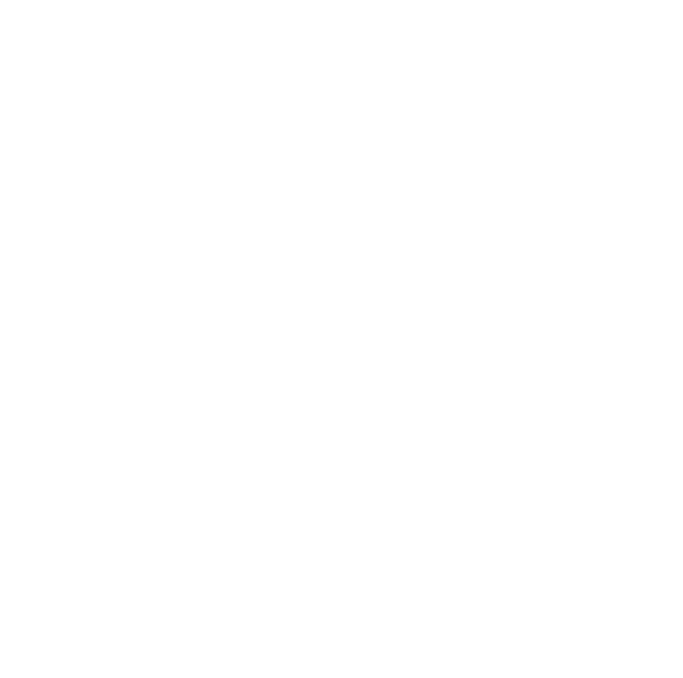

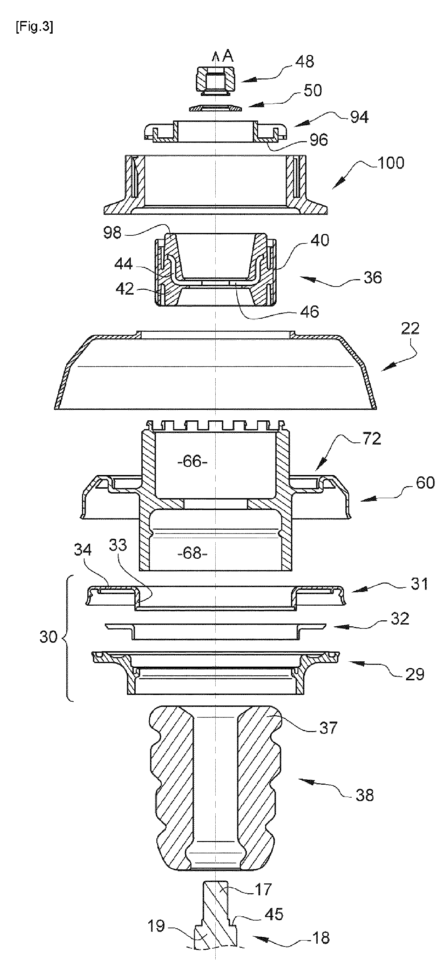

Le ressort hélicoïdal 24 n'est pas représenté aux figures 1 à 5.

Par contre on a représenté aux figures 2, 3, et 4 et 7 un bloc inférieur de choc 38 qui entoure la tige télescopique 18 et dont le tronçon supérieur 37 transmet son effort à l'élément structurel 22.

Le bloc de choc 38 est réalisé dans un matériau déformable élastiquement apte à être comprimé axialement, et il présente une forme générale cylindrique avec des gorges radiales 39 réparties axialement.

La partie supérieure de la jambe de force 12 peut aussi comporter des moyens pour l'accrochage d'un soufflet (Non représenté) de protection de la tige télescopique 18. Comme cela est représenté plus en détails aux figures 2 à 4, l'ensemble de filtration 36 comporte une enveloppe cylindrique tubulaire axiale 40 radialement extérieure qui est fixée à l'élément structurel 22, un bloc filtrant 42 radialement intermédiaire, et un élément radialement intérieur de fixation 44 auquel est fixé le tronçon 19 d'extrémité supérieure de la tige télescopique 18.

Le bloc filtrant 42 est par exemple un bloc en matériau élastomère naturel ou synthétique qui est apte à absorber certaines vibrations, et qui est ici fixé au tronçon 19 d'extrémité supérieure de la tige 18 par l'intermédiaire d'une portion radialement intérieure 46, en forme d'anneau plat percé centralement, de l'élément radialement intérieur de fixation 44 de l'ensemble de filtration 36.

Le tronçon 19 d'extrémité libre supérieure de la tige télescopique 18 comporte une extrémité filetée 17 qui est enfilée dans l'anneau plat 46 jusqu'à ce qu'un épaulement 45 de la tige vienne en butée contre l'anneau plat 46.

Le tronçon 19 d'extrémité libre supérieure de la tige télescopique 18 est fixé à l'anneau plat 46 au moyen d'un écrou 48 de serrage axial qui est vissé sur l'extrémité filetée 17 de la tige télescopique 18, ici avec interposition d'une rondelle 50 qui est par exemple une rondelle qui évite tout risque de desserrage de l'écrou 48.

L'ensemble de filtration 36 est soumis uniquement aux efforts transitant par la tige télescopique 18 de l'amortisseur 16. L'ensemble de filtration 36 ne reçoit aucun effort provenant du ressort hélicoïdal 24.

L'enveloppe cylindrique tubulaire axiale 40 de l'élément filtrant 36 est par exemple une douille métallique, comme l'élément radialement intérieur de fixation 44.

L'élément filtrant 36 est ici réalisé par surmoulage du bloc filtrant intermédiaire 42 sur l'enveloppe cylindrique tubulaire axiale 40 et l'élément radialement intérieur de fixation 44. Conformément aux enseignements de l'invention, la partie supérieure de la jambe de force 12 comporte un support multifonctions 60 en une seule pièce, un élément supérieur 94 qui applique un effort de précontrainte au bloc filtrant 42, et un élément 100 de fixation du support multifonctions 60 sur l'élément structurel 22.

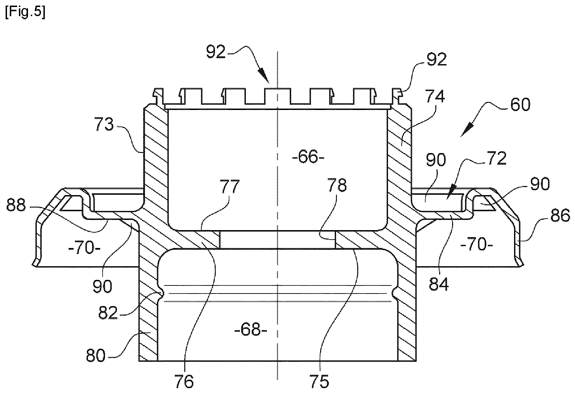

Le support multifonctions 60 est ici réalisé en une seule pièce moulée en matière plastique qui est représentée en détails à la figure 5.

Le support multifonctions 60 en une seule pièce comporte :
- une cavité supérieure 66 de filtration qui est ouverte axialement vers le haut et dans laquelle est fixée l'enveloppe extérieure 40 de l'ensemble de filtration 36 ;
- une cavité inférieure de choc 68 qui est ouverte axialement vers le bas et dans laquelle est monté le tronçon supérieur 37 du bloc de choc 38 ;
- un logement latéral 70 dans lequel est montée la butée tournante 30 ;
- et une bride latérale 72 de montage du support sur l'élément structurel 22.

Le support multifonctions 60 comporte un fut cylindrique supérieur, dit de filtration, qui est constitué d'une jupe cylindrique latérale supérieure 74 et d'une cloison radiale inférieure annulaire 76 qui délimitent latéralement et axialement vers le bas la cavité supérieure de filtration 66.

La cloison radiale inférieure annulaire 76 est percée centralement par un trou 78 pour le passage du tronçon 19 d'extrémité supérieure de la tige télescopique 18.

La cloison radiale inférieure annulaire 76 comporte une face inférieure 75 et une face supérieure 77.

En dessous de la cloison radiale inférieure annulaire 76, le support multifonctions 60 comporte un fut cylindrique inférieur, dit de choc, qui est constitué d'une jupe cylindrique latérale inférieure 80 et de ladite cloison radiale annulaire 76 qui délimitent latéralement et axialement vers le haut la cavité de choc 68 (Qui est aussi appelée le bol de saturation de la butée de choc).

Dans cet exemple de réalisation, la cloison radiale inférieure annulaire 76, et la jupe cylindrique latérale inférieure 80 sont sensiblement de mêmes diamètre et épaisseur et sont alignées axialement.

La cloison radiale inférieure annulaire 76 se présente comme une cloison intermédiaire qui divise en deux la cavité interne du support multifonctions 60 pour délimiter axialement les deux cavités supérieure de filtration 66 et inférieure de choc 68.

Intérieurement, le fut cylindrique inférieur 80 comporte une nervure 82 qui coopère avec une gorge 39 en vis-à-vis du bloc de choc 38.

Ici verticalement sensiblement au même niveau que la cloison radiale inférieure annulaire 76, la bride latérale 72 de montage du support multifonctions 60 sur l'élément structurel 22 s'étend radialement vers l'extérieur à partir de la paroi latérale externe du support multifonctions 60.

La bride latérale annulaire 72 comporte une joue annulaire 84 radialement intérieure de fixation qui se prolonge par une collerette latérale radialement extérieure 86 de forme tubulaire qui entoure latéralement la butée tournante 30.

La bride latérale annulaire 72 comporte des séries de nervures radiales inférieures et supérieures de renfort 90 pour lui conférer une très grande rigidité.

La joue annulaire 84 comporte une face inférieure 88 qui délimite axialement vers le haut le logement latéral 70.

La butée tournante 30 est ainsi agencée axialement globalement en-dessous de la cavité de filtration 66, c'est-à-dire globalement au niveau de la cloison radiale inférieure annulaire 76 du support multifonctions 60.

La bague supérieure 31 de la butée tournante 30 à anneau de frottement 32 est fixée sous la bride latérale 72 en étant emboîtée axialement autour de la jupe cylindrique latérale inférieure 80 du support multifonctions 60.

Au sens de l'invention, la bague inférieure tournante 29 de la butée tournante 30 constitue la pièce annulaire complémentaire qui est rapportée sous la bride latérale 72 pour délimiter le logement latéral 70.

A son bord supérieur d'extrémité libre, la jupe cylindrique latérale supérieure 74 comporte une série de crochets 92.

En position assemblée des composants, l'ensemble de filtration 36 est logé dans la cavité de filtration 66 dans laquelle il est emboîté à force par sertissage de son enveloppe cylindrique extérieure 40 à l'intérieur de la jupe cylindrique latérale supérieure 74.

La jambe de force 12 comporte un élément supérieur 94 qui applique un effort de précontrainte au bloc filtrant 42.

Selon ce premier exemple de réalisation, l'élément supérieur 94 est une rondelle qui est fixée par emboîtement élastique sur les crochets 92 de l'extrémité supérieure du fut de filtration 74.

En détail, comme visible sur les figures 2 à 4, la rondelle présente des ouvertures positionnées circulairement sur la surface supérieure. Les ouvertures se présentent sous forme de fentes régulièrement réparties circulairement, et à travers lesquelles traversent les crochets 92 de l'extrémité supérieure du fut de filtration 74. Chaque crochet 92 traverse la fente en regard de la rondelle 94.

La rondelle 94 comporte une face annulaire inférieure 96 qui s'étend en regard d'une portion supérieure 98 en vis-à-vis du bloc filtrant 36.

En position assemblée de la rondelle 94 sur le support multifonctions 60, sa face inférieure annulaire 96 applique un effort de précontrainte déterminé au bloc filtrant 42.

La valeur de l'effort de précontrainte peut être modifiée en modifiant les dimensions de la rondelle supérieure 94.

La présence des ouvertures sur la rondelle 94, traversées par les crochets 92 a pour effet technique de dissocier l'effort de précontrainte sur le bloc filtrant 42 de l'effort du serrage de l'écrou sur le support. Ainsi, quel que soit le serrage de l'écrou, on a le même effort de précontrainte sur le bloc filtrant 42, c'est-à-dire la même compression sur l'élastomère. L'assemblage des composants et sous-ensembles 38, 18+36, et 30 et leur montage sur le support multifonctions 60 peuvent être effectués dans un premier temps, puis cet ensemble est introduit axialement de bas en haut à travers le trou central 25 de la joue supérieure radiale et annulaire 23 de fixation de l'élément structurel 22.

Pour la fixation du support multifonctions 60 - et donc de cet ensemble - sur l'élément structurel 22, la jambe de force 12 comporte un élément supérieur de fixation du support multifonctions 60 par serrage axial de sa bride latérale de montage 72 contre une portion en vis à vis de la face supérieure de la joue annulaire 23 de l'élément structurel 22.

Dans cet exemple de réalisation, l'élément de fixation est un est un écrou 100 de serrage axial qui est monté vissé sur une portion filetée extérieurement 73 du fut cylindrique de fixation 74.

L'écrou de fixation 100 comporte une collerette latérale inférieure de serrage 102 qui est apte à coopérer avec une portion en vis-à-vis de la face supérieure de la joue annulaire 23 de l'élément structurel 22.

La joue annulaire 23 de l'élément structurel 22 est ainsi serrée axialement entre la collerette latérale inférieure de serrage 102 et la portion en vis à vis de la bride latérale de montage 72.

L'écrou de fixation 100 est par exemple réalisé en matière plastique et, comme on peut le voir à la figure 4, il peut être cannelé extérieurement pour faciliter sa préhension et son entraînement en rotation.

Au moment du serrage, l'écrou 100, assure un blocage anti-retour limitant le fluage.

Le support multifonctions 60 intègre ainsi la butée tournante 30, l'appui axial de l'extrémité supérieure du ressort hélicoïdal, le bol de saturation de la butée de choc, l'ensemble de filtration, et le centrage de l'ensemble sur l'élément structurel qui est par exemple une coupelle de caisse du véhicule.

La rondelle supérieure 94 de précontrainte du bloc filtrant 42 peut être assemblée sur le support multifonctions 66 en même temps que les autres composants 38, 18+36, et 30, ou bien après le montage de la jambe de force 12 sur l'élément structurel 22 et le serrage de l'écrou de fixation 100.

Le bloc de choc 38 transmet son effort à l'élément structurel 22, 23 par l'intermédiaire du support multifonctions 60 et de l'écrou 100.

Le ressort transmet son effort à l'élément structurel 22, 23 par l'intermédiaire de la butée tournante 30, du support multifonctions 60 et de l'écrou 100.

L'amortisseur hydraulique transmet son effort à l'élément structurel 22, 23 par l'intermédiaire de la tige 18, du bloc filtrant 36, du support multifonctions 60 et de l'écrou 100.

### Variante du premier exemple de réalisation

### Figures 6 et 7

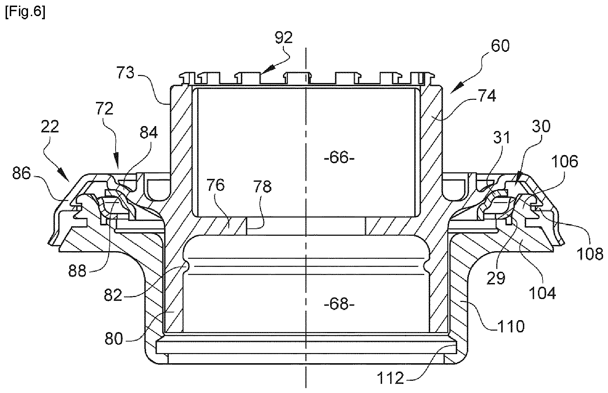

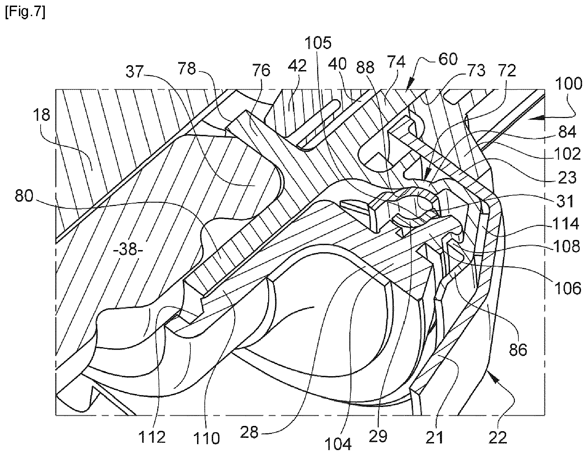

Dans la variante de réalisation représentée aux figures 6 et 7, la butée tournante 30 est une butée à billes.

La bague inférieure tournante 29 et la bague supérieure fixe 31 sont chacune conformée en un chemin de roulement pour les billes (Non représentées) de la butée tournante 30.

La bague supérieure 31 est fixée sous une portion complémentaire de la face inférieure 88 de la joue annulaire 84 de fixation de la bride latérale annulaire 72, par exemple par collage. Dans cette variante de réalisation, le logement latéral 70 est délimité verticalement vers le bas par une pièce annulaire complémentaire 104 qui est rapportée sous la bride latérale 72. A sa périphérie radiale extérieure, la pièce annulaire 104 comporte une branche tubulaire supérieure 106 qui est conformée en un crochet qui coopère avec une nervure interne 108 complémentaire de la jupe latérale extérieure 86 de la bride latérale annulaire 72 du support multifonctions 60.

La bague inférieure tournante 29 est fixée, par exemple par collage, sur la face supérieure 105 de la pièce annulaire 104.

La pièce annulaire 104 se prolonge axialement vers le bas par une jupe cylindrique 110 qui entoure la jupe cylindrique latérale inférieure 80 du support multifonctions 60 et qui, à son extrémité inférieure, comporte ici une gorge radiale interne 112 pour la fixation de l'extrémité supérieure d'un soufflet (Non représenté) de protection de la tige télescopique 18.

A la figure 7, on a représenté la coupelle supérieure 28 qui n'est pas représentée aux figures 2 à 4.

On a aussi représenté un anneau tronconique isolant 114 (Qui n'est pas représenté aux figures 1 à 5) qui est interposé axialement entre la bride latérale 72 de montage du support multifonctions 60 et la jupe latérale radialement extérieure 21 de l'élément structurel 22.

Le bloc de choc 38 transmet son effort à l'élément structurel 22, 23 par l'intermédiaire du support multifonctions 60 et de l'écrou 100.

Le ressort transmet son effort à l'élément structurel 22, 23 par l'intermédiaire de la butée tournante 30, du support multifonctions 60 et de l'écrou 100.

L'amortisseur hydraulique transmet son effort à l'élément structurel 22, 23 par l'intermédiaire de la tige 18, du bloc filtrant 36, du support multifonctions 60 et de l'écrou 100.

### Premier exemple non revendiqué

### Figure8

Ce premier exemple non-revendiqué sera décrit par comparaison avec le premier exemple de réalisation et sa variante.

La bride latérale de montage 72 est agencée axialement à l'extrémité supérieure de la jupe cylindrique latérale supérieure 74.

La butée tournante 30 est une butée à billes qui est agencée en partie supérieure du support multifonctions 60 et elle entoure la cavité de filtration 66.

L'élément supérieur 94 qui applique l'effort de précontrainte est une rondelle qui se prolonge radialement vers l'extérieur par une joue radiale 93 qui est reçue dans un logement complémentaire formé dans la face supérieure 87 de la bride de montage 72.

C'est ici la coupelle supérieure 28 qui se prolonge axialement vers le bas par une jupe cylindrique 110 qui entoure la jupe cylindrique latérale inférieure 80 du support multifonctions 60 et qui, à son extrémité inférieure, comporte une gorge radiale interne 112 pour la fixation de l'extrémité supérieure d'un soufflet (Non représenté) de protection de la tige télescopique 18.

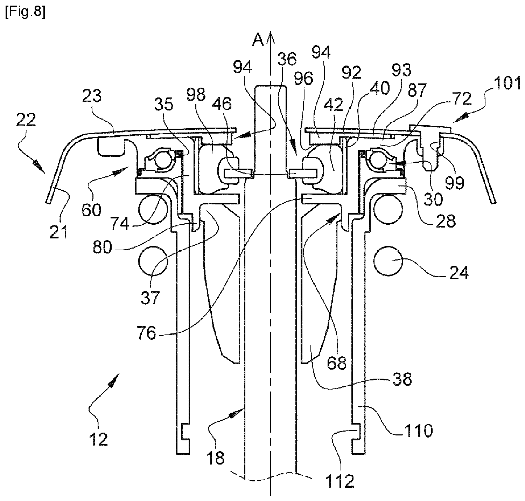

La fixation du support multifonctions 60 sur l'élément structurel 22 est ici une série de trois vis 101 de serrage axial dont l'une est visible à la figure 8.

Chaque vis 101 de serrage est montée vissée dans un trou taraudé 99 de la bride latérale de montage 72 du support multifonctions 60 et dont la tête de serrage est apte à coopérer avec la portion en vis à vis 23 de l'élément structurel 22 pour la serrer axialement contre une portion en vis à vis de la face supérieure 87 la bride latérale de montage 72.

Le tronçon supérieur 37 du bloc de choc 38 est retenu axialement dans la cavité de choc 68 dans laquelle son tronçon supérieur 37 est retenu par des moyens d'accrochage tels que ceux décrits précédemment ou par tous moyens équivalents et par exemple par emboitement élastique.

L'écrou 58 et la rondelle 60 ne sont pas représentés à la figure 8.

Le rôle multifonctions du support 60, l'assemblage des différents composants de la jambe de force 12 et son montage sur l'élément structurel 22 sont analogues à ce qui a été décrit précédemment.

Le bloc de choc 38 transmet son effort à l'élément structurel 22, 23 par l'intermédiaire du support multifonctions 60 et de l'écrou 100.

Le ressort transmet son effort à l'élément structurel 22, 23 par l'intermédiaire de la butée tournante à billes 30, du support multifonctions 60 et de l'écrou 100.

L'amortisseur hydraulique transmet son effort à l'élément structurel 22, 23 par l'intermédiaire de la tige 18, du bloc filtrant 36, du support multifonctions 60 et de l'écrou 100.

### Deuxième exemple non revendiqué

### Figure 9

Ce deuxième exemple non-revendiqué sera décrit par comparaison avec le premier exemple de réalisation.

Il diffère essentiellement du premier mode de réalisation par la conception de l'élément supérieur 94 qui applique l'effort de précontrainte au bloc filtrant de l'ensemble de filtration 36.

L'élément supérieur 94 est solidaire de l'écrou 100 de serrage axial avec lequel il est ici réalisé en une seule pièce par moulage en matière plastique.

Ainsi, l'écrou 100 de serrage axial comporte une paroi radiale supérieure 94 dont une portion 96, conformée en une rondelle d'appui, de la face inférieure coopère avec la portion supérieure 98 en vis à vis du bloc filtrant 36 pour lui appliquer un effort de précontrainte.

La paroi supérieure en forme de plaque qui intègre la rondelle de précontrainte lui confère une grande rigidité et une grande stabilité.

Le rôle multifonctions du support 60, l'assemblage des différents composants de la jambe de force 12 et son montage sur l'élément structurel 22 sont analogues à ce qui a été décrit précédemment.

Le bloc de choc 38 transmet son effort à l'élément structurel 22, 23 par l'intermédiaire du support multifonctions 60 et de l'écrou 100.

Le ressort transmet son effort à l'élément structurel 22, 23 par l'intermédiaire de la butée tournante 30, du support multifonctions 60 et de l'écrou 100.

L'amortisseur hydraulique transmet son effort à l'élément structurel 22, 23 par l'intermédiaire de la tige 18, du bloc filtrant 36, du support multifonctions 60 et de l'écrou 100.

### Variante du deuxième exemple non-revendiqué

### Figure 10

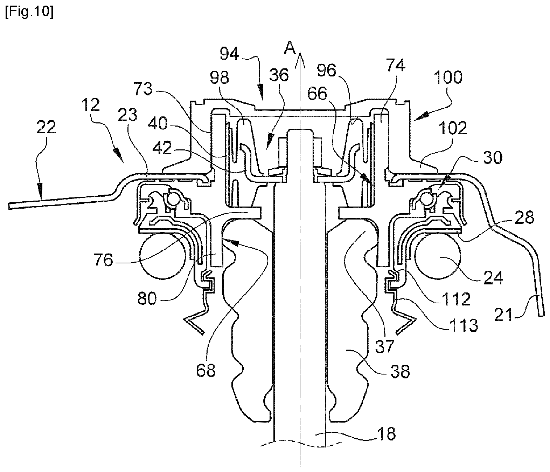

La variante de réalisation représentée à la figure 10 comporte une butée à billes comme dans la variante du premier mode de réalisation illustrée aux figures 6 et 7.

On a représenté à la figure 10 une portion supérieure 113 du soufflet de protection de la tige télescopique 18.

Le bloc de choc 38 transmet son effort à l'élément structurel 22, 23 par l'intermédiaire du support multifonctions 60 et de l'écrou 100.

Le ressort transmet son effort à l'élément structurel 22, 23 par l'intermédiaire de la butée tournante à billes 30, du support multifonctions 60 et de l'écrou 100.

L'amortisseur hydraulique transmet son effort à l'élément structurel 22, 23 par l'intermédiaire de la tige 18, du bloc filtrant 36, du support multifonctions 60 et de l'écrou 100.

### Troisième exemple non revendiqué

### Figure 11

Ce troisième exemple non-revendiqué sera décrit par comparaison avec le premier exemple de réalisation et sa variante.

La bride latérale de montage 72 est agencée axialement sensiblement à mi-hauteur de la jupe cylindrique latérale supérieure 74.

La butée tournante 30 est une butée à billes qui entoure la cavité de filtration 66.

Ce quatrième exemple de réalisation diffère essentiellement du premier mode de réalisation et de sa variante par la conception de l'élément supérieur 94 qui applique l'effort de précontrainte au bloc filtrant 42, 98 de l'ensemble de filtration 36.

L'élément supérieur 94 est solidaire de l'écrou 100 de serrage axial. Il est intégré à l'écrou 100, avec lequel il est ici réalisé en une seule pièce par moulage, sous la forme d'une douille interne 95 qui s'étend axialement vers le bas à l'intérieur de la cavité de filtration 66 et dont l'extrémité libre inférieure est conformée en une rondelle 96 qui coopère avec la portion supérieure 98 en vis à vis du bloc filtrant 36 pour lui appliquer un effort de précontrainte.

Le rôle multifonctions du support 60, l'assemblage des différents composants de la jambe de force 12 et son montage sur l'élément structurel 22 sont analogues à ce qui a été décrit précédemment.

Le bloc de choc 38 transmet son effort à l'élément structurel 22, 23 par l'intermédiaire du support multifonctions 60 et de l'écrou 100.

Le ressort transmet son effort à l'élément structurel 22, 23 par l'intermédiaire de la butée tournante 30, du support multifonctions 60 et de l'écrou 100.

L'amortisseur hydraulique transmet son effort à l'élément structurel 22, 23 par l'intermédiaire de la tige 18, du bloc filtrant 36, du support multifonctions 60 et de l'écrou 100.

### Quatrième exemple linon-revendiqué

### Figure 12

Ce quatrième exemple non-revendiqué sera décrit par comparaison avec le troisième exemple non-revendiqué.

La bride latérale de montage 72 est agencée axialement sensiblement à mi-hauteur de la jupe cylindrique latérale supérieure 74.

La butée tournante 30 est une butée à billes qui entoure la cavité de filtration qui loge le bloc filtrant 36.

Le support multifonctions 60 ne comporte pas de cloison radiale interne qui délimite entre elles les cavités supérieure de filtration 66 et inférieure 68 de choc.

Le support multifonctions 60 est étagé intérieurement et son tronçon inférieur 80 de plus grand diamètre délimite la cavité de choc 68.

Les deux étages du support multifonctions 60 sont délimités par une face annulaire inférieure 75.

Le bloc de choc 38 et le bloc filtrant 42 sont réalisés en une seule pièce, et le tronçon supérieur 37 du bloc de choc 38 est surmoulé autour d'une rondelle métallique radialement extérieure 120 qui est apte à coopérer avec la face annulaire inférieure 75.

Le bloc de choc 38 transmet son effort à l'élément structurel 22, 23 par l'intermédiaire du support multifonctions 60 et de l'écrou 100.

Le ressort transmet son effort à l'élément structurel 22, 23 par l'intermédiaire de la butée tournante à billes 30, du support multifonctions 60 et de l'écrou 100.

L'amortisseur hydraulique transmet son effort à l'élément structurel 22, 23 par l'intermédiaire de la tige 18, du bloc filtrant 36, du support multifonctions 60 et de l'écrou 100.

## Revendications

1. Véhicule automobile comprenant une jambe de force (12) et un élément structurel (22), la jambe de force (12) destinée à équiper une suspension d'une roue (20) du véhicule, la jambe de force (12) comportant :
- un amortisseur (16) équipé d'une tige axiale télescopique (18) dont un tronçon (19) d'extrémité supérieure est lié à l'élément structurel (22) du véhicule automobile ;
- un ressort hélicoïdal (24) qui entoure la tige télescopique (18) ;
- une coupelle supérieure (28) d'appui axial de l'extrémité supérieure du ressort hélicoïdal (24) ;
- une butée tournante (30) qui est interposée axialement entre la coupelle supérieure (28) et l'élément structurel (22), et qui comporte une bague supérieure (31) qui est fixe par rapport à l'élément structurel (22) et une bague inférieure (29) tournante qui reçoit l'effort du ressort hélicoïdal (24) ;
- un bloc de choc (38) qui entoure la tige télescopique (18) et dont un tronçon supérieur (37) transmet son effort à l'élément structurel (22) ;
- un ensemble de filtration (36) qui comporte une enveloppe cylindrique (40) radialement extérieure qui est fixée à l'élément structurel (22), un bloc filtrant intermédiaire (42), et un élément radialement intérieur de fixation (44, 46) auquel est fixé le tronçon (19) d'extrémité supérieure de la tige télescopique (18), la jambe de force étant définie en ce qu'elle comporte un support multifonctions (60) en une seule pièce qui comporte :
- une cavité de filtration (66) ouverte axialement vers le haut dans laquelle est fixée l'enveloppe extérieure (40) de l'ensemble de filtration (36) ;
- une cavité de choc (68) ouverte axialement vers le bas dans laquelle est monté le tronçon supérieur du bloc de choc ;
- un logement latéral (70) dans lequel est montée la butée tournante (30) ; - et une bride latérale (72) de montage du support multifonctions (60) sur l'élément structurel (22), et la jambe de force étant définie en ce qu'elle comporte :
- un élément supérieur (94) qui applique un effort de précontrainte au bloc filtrant (42, 98) ;
- au moins un élément (100) de fixation du support multifonctions (60) sur l'élément structurel (22) par serrage axial de sa bride latérale de montage(102) contre une portion en vis-à-vis (23) de l'élément structurel (22). et en ce que le support multifonctions (60) comporte :
- un fut cylindrique de filtration (74), ouvert axialement vers le haut, qui est constitué d'une jupe cylindrique latérale (74) qui délimite latéralement la cavité de filtration (66) et en ce que l'élément supérieur est une rondelle (94) qui est fixée par emboîtement élastique sur l'extrémité supérieure (92) du fut de filtration (74) et dont une face inférieure (96) applique un effort de précontrainte au bloc filtrant (42, 98),
**caractérisé en ce que** - une extrémité supérieure du fut de filtration (74) munie de crochets (92), la rondelle (94), comprenant une face supérieure munie d'ouvertures à travers lesquelles traversent les crochets (92) de l'extrémité supérieure du fut de filtration (74), en position assemblée de la rondelle (94) sur le support multifonctions (60),
la jambe de force (12) étant par ailleurs définie **en ce que**, en position assemblée de la rondelle (94) sur le support multifonctions (60), la face inférieure annulaire (96) de la rondelle (94) applique un effort de précontrainte déterminé au bloc filtrant (42), grâce à quoi, la valeur de l'effort de précontrainte appliqué au bloc filtrant peut être modifiée en modifiant les dimensions de la rondelle supérieure (94), le au moins un élément de fixation du support multifonctions (60) sur l'élément structurel (22) est un écrou (100) de serrage axial qui est monté vissé sur une portion (73) filetée extérieurement du fut cylindrique de fixation (74), et **en ce que** la valeur de l'effort de précontrainte appliqué au bloc filtrant par la rondelle 94 est indépendante de la position de serrage dudit écrou (100).

2. Véhicule automobile selon la revendication 1, **caractérisé en ce que** le support multifonctions (60) comporte :
- un fut cylindrique de filtration (74), ouvert axialement vers le haut, qui est constitué d'une jupe cylindrique latérale (74) et d'une cloison radiale inférieure (76) qui délimitent latéralement et axialement vers le bas la cavité de filtration (66), et dont la cloison radiale inférieure (76) est percée centralement (78) pour le passage du tronçon (19) d'extrémité supérieure de la tige télescopique (18) ;
un fut cylindrique de choc (68), ouvert axialement vers le bas, qui est constitué d'une jupe cylindrique latérale (68) et de ladite cloison radiale (76) qui délimitent latéralement et axialement vers le haut la cavité de choc (68) ;
- la bride latérale (72) de montage du support multifonctions (60) sur l'élément structurel (22), qui s'étend radialement vers l'extérieur, dont une face inférieure (88) délimite axialement vers le haut le logement latéral (70) et en vis-à-vis de laquelle est agencée la bague supérieure (31) de la butée tournante (30) ;
- une pièce annulaire complémentaire (29, 104) qui est rapportée sous la bride latérale (72) de montage et qui, avec la bride latérale (72) de montage, délimite le logement latéral (70).

3. Véhicule automobile selon l'une quelconque des revendications précédentes, **caractérisé en ce que** la butée tournante (30) est agencée axialement en-dessous de la cavité de filtration (66).

4. Véhicule automobile selon l'une des revendications 1 et 2, **caractérisé en ce que** la butée tournante (30) entoure la cavité de filtration (66).

5. Véhicule automobile selon l'une quelconque des revendications précédentes, **caractérisé en ce que** la cavité de choc (68) comporte des moyens (82) d'accrochage du tronçon supérieur (37) du bloc de choc (38).

6. Véhicule automobile selon la revendication 1, **caractérisé en ce que** l'écrou (100) de serrage axial monté vissé sur une portion (73) filetée extérieurement du fut cylindrique de fixation (74), comporte une collerette latérale inférieure (102) de serrage qui est apte à coopérer avec une portion en vis-à-vis (84) de la bride latérale (72) de montage du support multifonctions (60) pour serrer axialement une portion (23) de l'élément structurel (22) contre une portion en vis à vis de la bride latérale de montage (72).

7. Véhicule automobile selon la revendication 1, **caractérisé en ce que** l'enveloppe cylindrique (40) radialement extérieure de l'ensemble de filtration (36) est une douille qui est montée sertie axialement à l'intérieur du fut de filtration (74) du support multifonctions (60).

8. Véhicule automobile selon la revendication 1, caractérisé ne ce que la butée tournante (30) est une butée à billes qui est logée dans le logement latéral (70) entre la bride latérale (72) et la pièce annulaire complémentaire (104) qui est rapportée sous la bride latérale (72).

9. Véhicule automobile selon la revendication 1, caractérisé ne ce que la butée tournante (30) est une butée à anneau de frottement (32) qui est interposé axialement entre la bague supérieure (31) de la butée tournante (30) qui est fixée sous la bride latérale (72) de montage, et en ce que la pièce annulaire complémentaire qui est rapportée sous la bride latérale(72) de montage, constitue la bague inférieure tournante (29) de la butée tournante (30).

## Patentansprüche

1. Kraftfahrzeug, welches ein Federbein (12) und ein Strukturelement (22) umfasst, wobei das Federbein (12) dazu bestimmt ist, an einer Aufhängung eines Rades (20) des Fahrzeugs eingesetzt zu werden, wobei das Federbein (12) aufweist:
- einen Stoßdämpfer (16), der mit einer axialen Teleskopstange (18) ausgestattet ist, von der ein oberer Endabschnitt (19) mit dem Strukturelement (22) des Kraftfahrzeugs verbunden ist;
- eine Schraubenfeder (24), welche die Teleskopstange (18) umgibt;
- einen oberen Federteller (28) zur axialen Abstützung des oberen Endes der Schraubenfeder (24);
- einen Drehanschlag (30), der axial zwischen dem oberen Federteller (28) und dem Strukturelement (22) angeordnet ist und der einen oberen Ring (31), der bezüglich des Strukturelements (22) ortsfest ist, und einen drehbaren unteren Ring (29), der die Kraft der Schraubenfeder (24) aufnimmt, aufweist;
- einen Stoßblock (38), der die Teleskopstange (18) umgibt und von dem ein oberer Abschnitt (37) seine Kraft auf das Strukturelement (22) überträgt;
- eine Filteranordnung (36), welche eine radial äußere zylindrische Hülle (40), die an dem Strukturelement (22) befestigt ist, einen dazwischenliegend angeordneten Filterblock (42) und ein radial inneres Befestigungselement (44, 46), an dem der obere Endabschnitt (19) der Teleskopstange (18) befestigt ist, aufweist, wobei das Federbein dadurch definiert ist, dass es einen einstückigen Multifunktionsträger (60) aufweist, welcher aufweist:
- einen axial nach oben offenen Filtrationshohlraum (66), in dem die äußere Hülle (40) der Filteranordnung (36) befestigt ist;
- einen axial nach unten offenen Stoßhohlraum (68), in dem der obere Abschnitt des Stoßblocks angebracht ist;
- eine seitliche Aufnahme (70), in welcher der Drehanschlag (30) angebracht ist;
- und einen seitlichen Flansch (72) zur Montage des Multifunktionsträgers (60) an dem Strukturelement (22), und wobei das Federbein dadurch definiert ist, dass es aufweist:
- ein oberes Element (94), das eine Vorspannkraft auf den Filterblock (42, 98) ausübt;
- mindestens ein Element (100) zur Befestigung des Multifunktionsträgers (60) an dem Strukturelement (22) durch axiales Verspannen seines seitlichen Montageflansches (102) mit einem gegenüberliegenden Abschnitt (23) des Strukturelements (22), und dadurch, dass der Multifunktionsträger (60) aufweist:
- eine axial nach oben offene zylindrische Filtrationshülse (74), die aus einem seitlichen zylindrischen Mantel (74) besteht, der den Filtrationshohlraum (66) seitlich begrenzt, und dadurch, dass das obere Element eine runde Scheibe (94) ist, die durch elastisches Aufstecken auf das obere Ende (92) der Filtrationshülse (74) befestigt ist und von der eine Unterseite (96) eine Vorspannkraft auf den Filterblock (42, 98) ausübt,
**dadurch gekennzeichnet, dass** ein oberes Ende der Filtrationshülse (74) mit Haken (92) versehen ist, wobei die runde Scheibe (94) eine Oberseite aufweist, die mit Öffnungen versehen ist, die von den Haken (92) des oberen Endes der Filtrationshülse (74) in der auf dem Multifunktionsträger (60) montierten Position der runden Scheibe (94) durchquert werden,
wobei das Federbein (12) außerdem dadurch definiert ist, dass in der auf dem Multifunktionsträger (60) montierten Position der runden Scheibe (94) die ringförmige Unterseite (96) der runden Scheibe (94) eine bestimmte Vorspannkraft auf den Filterblock (42) ausübt, wodurch der Wert der auf den Filterblock ausgeübten Vorspannkraft geändert werden kann, indem die Abmessungen der oberen runden Scheibe (94) geändert werden, wobei das mindestens eine Element zur Befestigung des Multifunktionsträgers (60) an dem Strukturelement (22) eine Mutter (100) zum axialen Festspannen ist, die durch Aufschrauben auf einen mit einem Außengewinde versehenen Abschnitt (73) der zylindrischen Befestigungshülse (74) angebracht ist, und dadurch, dass der Wert der Vorspannkraft, die von der runden Scheibe (94) auf den Filterblock ausgeübt wird, unabhängig von der Spannposition der Mutter (100) ist.

2. Kraftfahrzeug nach Anspruch 1, **dadurch gekennzeichnet, dass** der Multifunktionsträger (60) aufweist:
- eine axial nach oben offene zylindrische Filtrationshülse (74), die aus einem seitlichen zylindrischen Mantel (74) und einer unteren radialen Trennwand (76) besteht, die den Filtrationshohlraum (66) seitlich und axial nach unten begrenzen, und deren untere radiale Trennwand (76) für den Durchgang des oberen Endabschnitts (19) der Teleskopstange (18) mittig durchbohrt (78) ist;
eine axial nach unten offene zylindrische Stoßhülse (68), die aus einem seitlichen zylindrischen Mantel (68) und der radialen Trennwand (76) besteht, die den Stoßhohlraum (68) seitlich und axial nach oben begrenzen;
- den seitlichen Flansch (72) zur Montage des Multifunktionsträgers (60) an dem Strukturelement (22), der sich radial nach außen erstreckt, von dem eine Unterseite (88) die seitliche Aufnahme (70) axial nach oben begrenzt und gegenüber von dem der obere Ring (31) des Drehanschlags (30) angeordnet ist;
- ein komplementäres ringförmiges Teil (29, 104), das unter dem seitlichen Montageflansch (72) angebracht ist und das mit dem seitlichen Montageflansch (72) die seitliche Aufnahme (70) begrenzt.

3. Kraftfahrzeug nach einem der vorhergehenden Ansprüche, **dadurch gekennzeichnet, dass** der Drehanschlag (30) axial unterhalb des Filtrationshohlraums (66) angeordnet ist.

4. Kraftfahrzeug nach einem der Ansprüche 1 und 2, **dadurch gekennzeichnet, dass** der Drehanschlag (30) den Filtrationshohlraum (66) umgibt.

5. Kraftfahrzeug nach einem der vorhergehenden Ansprüche, **dadurch gekennzeichnet, dass** der Stoßhohlraum (68) Mittel (82) zum Anhängen des oberen Abschnitts (37) des Stoßblocks (38) aufweist.

6. Kraftfahrzeug nach Anspruch 1, **dadurch gekennzeichnet, dass** die Mutter (100) zum axialen Festspannen, die durch Aufschrauben auf einen mit einem Außengewinde versehenen Abschnitt (73) der zylindrischen Befestigungshülse (74) angebracht ist, einen unteren seitlichen Spannkragen (102) aufweist, der geeignet ist, mit einem gegenüberliegenden Abschnitt (84) des seitlichen Flansches (72) zur Montage des Multifunktionsträgers (60) zusammenzuwirken, um einen Abschnitt (23) des Strukturelements (22) mit einem gegenüberliegenden Abschnitt des seitlichen Montageflansches (72) axial zu verspannen.

7. Kraftfahrzeug nach Anspruch 1, **dadurch gekennzeichnet, dass** die radial äußere zylindrische Hülle (40) der Filteranordnung (36) eine Buchse ist, die durch axiales Einpressen im Inneren der Filtrationshülse (74) des Multifunktionsträgers (60) angebracht ist.

8. Kraftfahrzeug nach Anspruch 1, **dadurch gekennzeichnet, dass** der Drehanschlag (30) ein Druckkugellager ist, das in der seitlichen Aufnahme (70) zwischen dem seitlichen Flansch (72) und dem komplementären ringförmigen Teil (104), das unter dem seitlichen Flansch (72) angebracht ist, aufgenommen ist.

9. Kraftfahrzeug nach Anspruch 1, **dadurch gekennzeichnet, dass** der Drehanschlag (30) ein Reibring-Anschlag (32) ist, der axial zwischen dem oberen Ring (31) des Drehanschlags (30) angeordnet ist, der unter dem seitlichen Montageflansch (72) befestigt ist, und dadurch, dass das komplementäre ringförmige Teil, das unter dem seitlichen Montageflansch (72) angebracht ist, den drehbaren unteren Ring (29) des Drehanschlags (30) bildet.

## Claims

1. Motor vehicle comprising a strut (12) and a structural element (22), the strut (12) being intended to equip a suspension of a wheel (20) of the vehicle, the strut (12) comprising:
- a shock absorber (16) equipped with a telescopic axial rod (18) of which an upper end section (19) is connected to the structural element (22) of the motor vehicle;
- a helical spring (24) which surrounds the telescopic rod (18);
- an upper cup (28) for axially bearing the upper end of the helical spring (24);
- a rotary thrust bearing (30) which is axially interposed between the upper cup (28) and the structural element (22), and which comprises an upper ring (31) which is fixed with respect to the structural element (22) and a rotating lower ring (29) which receives the force of the helical spring (24);
- a shock block (38) which surrounds the telescopic rod (18) and of which an upper section (37) transmits its force to the structural element (22);
- a filtration assembly (36) which comprises a radially outer cylindrical envelope (40) which is fastened to the structural element (22), an intermediate filtering block (42), and a radially inner fastening element (44, 46) to which the upper end section (19) of the telescopic rod (18) is fastened, the strut being defined in that it comprises a one-piece multifunctional support (60) which comprises:
- an axially upwardly open filtration cavity (66) in which the outer envelope (40) of the filtration assembly (36) is fastened;
- an axially downwardly open shock cavity (68) in which the upper section of the shock block is mounted;
- a lateral housing (70) in which the rotary thrust bearing (30) is mounted;
- and a lateral mounting flange (72) for mounting the multifunctional support (60) on the structural element (22), and the strut being defined in that it comprises:
- an upper element (94) which applies a preloading force to the filtering block (42, 98);
- at least one element (100) for fastening the multifunctional support (60) on the structural element (22) by axially clamping its lateral mounting flange (102) against a facing portion (23) of the structural element (22), and in that the multifunctional support (60) comprises:
- an axially upwardly open cylindrical filtration barrel (74) which consists of a lateral cylindrical skirt (74) which laterally delimits the filtration cavity (66), and in that the upper element is a washer (94) which is fastened by elastic fitting on the upper end (92) of the filtration barrel (74) and of which a lower face (96) applies a preloading force to the filtering block (42, 98),
**characterized in that** an upper end of the filtration barrel (74) is provided with hooks (92), the washer (94) comprising an upper face provided with openings through which pass the hooks (92) of the upper end of the filtration barrel (74), in the assembled position of the washer (94) on the multifunctional support (60),
the strut (12) being moreover defined **in that**, in the assembled position of the washer (94) on the multifunctional support (60), the annular lower face (96) of the washer (94) applies a defined preloading force to the filtering block (42), by virtue of which the value of the preloading force applied to the filtering block can be modified by modifying the dimensions of the upper washer (94), the at least one element for fastening the multifunctional support (60) on the structural element (22) is an axial clamping nut (100) which is mounted screwed on an externally threaded portion (73) of the cylindrical fastening barrel (74), and **in that** the value of the preloading force applied to the filtering block by the washer (94) is independent of the clamping position of said nut (100).

2. Motor vehicle according to Claim 1, **characterized in that** the multifunctional support (60) comprises:
- an axially upwardly open cylindrical filtration barrel (74) which consists of a lateral cylindrical skirt (74) and of a lower radial partition (76) which laterally and axially downwardly delimit the filtration cavity (66), and of which the lower radial partition (76) is pierced centrally (78) for the passage of the upper end section (19) of the telescopic rod (18);
an axially downwardly open cylindrical shock barrel (68) which consists of a lateral cylindrical skirt (68) and of said radial partition (76) which laterally and axially upwardly delimit the shock cavity (68);
- the lateral mounting flange (72) for mounting the multifunctional support (60) on the structural element (22), which extends radially outwardly, of which a lower face (88) axially upwardly delimits the lateral housing (70) and facing which is arranged the upper ring (31) of the rotary thrust bearing (30);
- a complementary annular part (29, 104) which is attached below the lateral mounting flange (72) and which, with the lateral mounting flange (72), delimits the lateral housing (70).

3. Motor vehicle according to either one of the preceding claims, **characterized in that** the rotary thrust bearing (30) is arranged axially beneath the filtration cavity (66).

4. Motor vehicle according to either one of Claims 1 and 2, **characterized in that** the rotary thrust bearing (30) surrounds the filtration cavity (66).

5. Motor vehicle according to any one of the preceding claims, **characterized in that** the shock cavity (68) comprises means (82) for attaching the upper section (37) of the shock block (38).

6. Motor vehicle according to Claim 1, **characterized in that** the axial clamping nut (100) mounted screwed on an externally threaded portion (73) of the cylindrical fastening barrel (74) comprises a lower lateral clamping collar (102) which is able to cooperate with a facing portion (84) of the lateral mounting flange (72) of the multifunctional support (60) in order to axially clamp a portion (23) of the structural element (22) against a facing portion of the lateral mounting flange (72).

7. Motor vehicle according to Claim 1, **characterized in that** the radially outer cylindrical envelope (40) of the filtration assembly (36) is a sleeve which is mounted crimped axially inside the filtration barrel (74) of the multifunctional support (60).

8. Motor vehicle according to Claim 1, **characterized in that** the rotary thrust bearing (30) is a thrust ball bearing which is housed in the lateral housing (70) between the lateral flange (72) and the complementary annular part (104) which is attached below the lateral flange (72).

9. Motor vehicle according to Claim 1, **characterized in that** the rotary thrust bearing (30) is a thrust bearing with a friction ring (32) which is axially interposed between the upper ring (31) of the rotary thrust bearing (30) which is fastened below the lateral mounting flange (72), and **in that** the complementary annular part which is attached below the lateral mounting flange (72) constitutes the rotating lower ring (29) of the rotary thrust bearing (30).
